# EUROPEAN PATENT APPLICATION

(11) **EP 4 841 774 A1**
(43) Date of publication of application: **18.11.2026**
(21) Application number: 25858021.6
(22) Date of filing: 04.09.2025
(51) Int. Cl.: H01M 50/244

(54) **CASE, BATTERY PACK, AND VEHICLE**

(30) Priority: 31.03.2025 CN 202520598949 U; 31.03.2025 CN 202510402086
(71) Applicant: Eve Energy Co., Ltd., Huizhou, Guangdong 516006 (CN)
(72) Inventor: JIANG, Jibing, Huizhou, Guangdong 516006 (CN); YUAN, Xu, Huizhou, Guangdong 516006 (CN); QU, Kai, Huizhou, Guangdong 516006 (CN); CHEN, Chaohai, Huizhou, Guangdong 516006 (CN); CHEN, Zhiwei, Huizhou, Guangdong 516006 (CN)
(74) Representative: Berggren Oy
(86) International application number: PCT/CN2025/119102
(87) International publication number: WO 2026/208080

(57) **Abstract**

A housing, a battery pack, and vehicle are provided. The housing includes a bottom plate and a plurality of side portions. The plurality of side portions are connected along a circumferential direction of the bottom plate. The side portions include a base plate and a connecting platform. The base plate has a first side surface and a second side surface facing away from each other in a thickness direction of the base plate. The connecting platform is connected to the first side surface. The connecting platform extends along the thickness direction of the base plate and is connected to the bottom plate. The width of the base plate is defined as W, and the distance between an end of the connecting platform facing away from the first side surface and the second side surface in the thickness direction of the base plate is defined as L1, where L1 and W satisfy 0 < L1/W < 1/4.

## Description

This application claims priority to Chinese Patent Application No. 202520598949.X, filed on March 31, 2025, and Chinese Patent Application No. 202510402086.9, filed on March 31, 2025, the entire contents of the foregoing applications are incorporated herein by reference.

### TECHNICAL FIELD

The invention relates to the field of battery technologies, and in particular, to a housing, a battery pack, and a vehicle.

### BACKGROUND

The battery pack generally includes a housing and a battery module disposed in the housing. In order to increase the capacity of the battery pack, the housing of the battery pack generally needs to be large enough to ensure that more battery modules can be accommodated. In the related art, the housing is formed by enclosing a plurality of extruded side plates and a bottom plate together.

### SUMMARY

However, when the size of the housing is large, the size of the side plate needs to be sufficiently large for extrusion. The housing formed by enclosing multiple large-sized side plates and a bottom plate has reduced seismic and anti-torsional performance.

In a first aspect, embodiments of the invention provide a housing, including:
a bottom plate; and
a plurality of side portions sequentially connected along a circumferential direction of the bottom plate, where each of the side portions includes a base plate and a connecting platform, the base plate includes a first side surface and a second side surface opposite to each other along a thickness direction of the base plate, the connecting platform is connected to the first side surface, the connecting platform extends along the thickness direction of the base plate and is connected to the bottom plate, a width of the base plate is defined as W, a distance between an end of the connecting platform facing away from the first side surface and the second side surface along the thickness direction of the base plate is defined as L1, and L1 and W satisfy: 0< L1/W < 1/4.

In a second aspect, embodiments of the invention provide a battery pack, including a housing, where the housing includes:
a bottom plate; and
a plurality of side portions sequentially connected along a circumferential direction of the bottom plate, where each of the side portions includes a base plate and a connecting platform, the base plate includes a first side surface and a second side surface opposite to each other along a thickness direction of the base plate, the connecting platform is connected to the first side surface, the connecting platform extends along the thickness direction of the base plate and is connected to the bottom plate, a width of the base plate is defined as W, a distance between an end of the connecting platform facing away from the first side surface and the second side surface along the thickness direction of the base plate is defined as L1, and L1 and W satisfy: 0< L1/W < 1/4.

In a third aspect, the invention further provides a vehicle, where the vehicle includes a battery pack, the battery pack includes a housing, and the housing includes:
a bottom plate; and
a plurality of side portions sequentially connected along a circumferential direction of the bottom plate, where each of the side portions includes a base plate and a connecting platform, the base plate includes a first side surface and a second side surface opposite to each other along a thickness direction of the base plate, the connecting platform is connected to the first side surface, the connecting platform extends along the thickness direction of the base plate and is connected to the bottom plate, a width of the base plate is defined as W, a distance between an end of the connecting platform facing away from the first side surface and the second side surface along the thickness direction of the base plate is defined as L1, and L1 and W satisfy: 0< L1/W < 1/4.

### BENEFICIAL EFFECTS

In the embodiments of the invention, the connecting platform connects the base plate with the bottom plate, and the connecting platform functions as a reinforcing rib, which increases the overall stability of the side portion in the thickness direction. The connecting platform extends along the thickness direction of the base plate and is connected to the bottom plate. This design can increase the cross-sectional moment of inertia, thereby significantly improving the bending stiffness of the side portion in the thickness direction and the overall shock resistance of the housing. The width W of the base plate determines the main bearing area of the side portion, which directly affects its bending resistance and lateral stability. The distance L1 reflects the extension length of the connecting platform, which has an important influence on the overall rigidity. The width W of the base plate and the distance L1 between an end of the first side surface and the second side surface are defined to satisfy 0< L1/W < 1/4, so that when a larger side portion is extruded, the design of the connecting platform can reduce the lateral obstruction to the metal flow on the premise of improving the seismic and torsional resistance of the housing, so that the metal is easier to form uniform laminar flow along the width direction of the base plate, and the filling defects caused by local turbulence are reduced. In addition, the design of 0 < L/W < 1/4 can not only reduce the extrusion force required for the extrusion die during extrusion molding, thereby improving the service life of the extrusion die. In addition, the quality of the formed housing can also be improved.

### BRIEF DESCRIPTION OF THE DRAWINGS

FIG. 1 is a schematic view of a housing according to a possible implementation of the invention.
FIG. 2 is a partial enlarged view of part A shown in FIG. 1.
FIG. 3 is a schematic view of a side portion according to a possible implementation of the invention.
FIG. 4 is a schematic cross-sectional view (from a first perspective) of a housing according to a possible implementation of the invention.
FIG. 5 is a partial enlarged view of part B shown in FIG. 4.
FIG. 6 is a schematic view of a connector according to a possible implementation of the invention.
FIG. 7 is a schematic view of a crossbeam according to a possible implementation of the invention.
FIG. 8 is a partial enlarged view of part C shown in FIG. 7.
FIG. 9 is a schematic cross-sectional view of a housing (from a second perspective) according to a possible implementation of the invention.
FIG. 10 is a partial enlarged view of part D shown in FIG. 9.
FIG. 11 is a partially enlarged view of part E shown in FIG. 9.

Description of reference numerals:
10, housing; 1, bottom plate; 2, side portion; 2a, first side portion; 2b, second side portion; 21, base plate; 211, first side surface; 212, second side surface; 213, first plate section; 214, second plate section; 215, third plate section; 22, connecting platform; 3, screw connector; 31, first screw connector; 32, second screw connector; 4, crossbeam; 41, plugging hole; 42, groove; 43, first sidewall; 5, connector; 51, plugging platform; 52, connecting arm; 521, first surface; 522, second surface; 523, connecting body; 524, abutment platform; 71, first chamfer; 72, second chamfer; 73, third chamfer; 8, opening.

### DETAILED DESCRIPTION

The battery pack generally includes a housing and a battery module disposed in the housing. In order to increase the capacity of the battery pack, the housing of the battery pack generally needs to be large enough to ensure that more battery modules can be accommodated. In the related art, the housing is formed by enclosing a plurality of extruded side plates and a bottom plate together. However, when the size of the housing is large, the size of the side plate needs to be sufficiently large for extrusion. The housing formed by enclosing multiple large-sized side plates and a bottom plate has reduced seismic and anti-torsional performance.

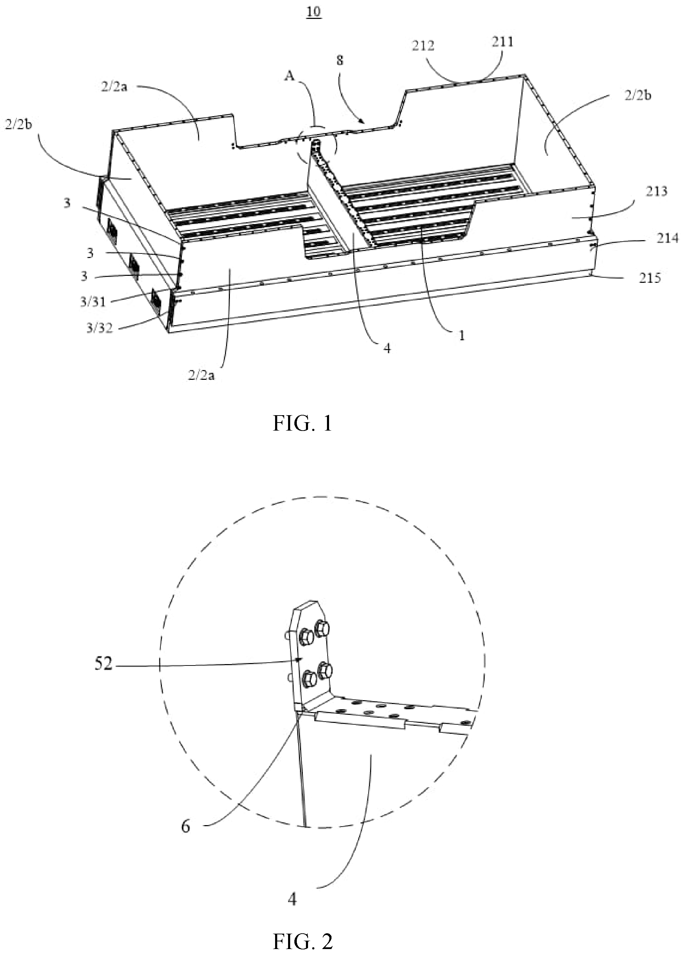

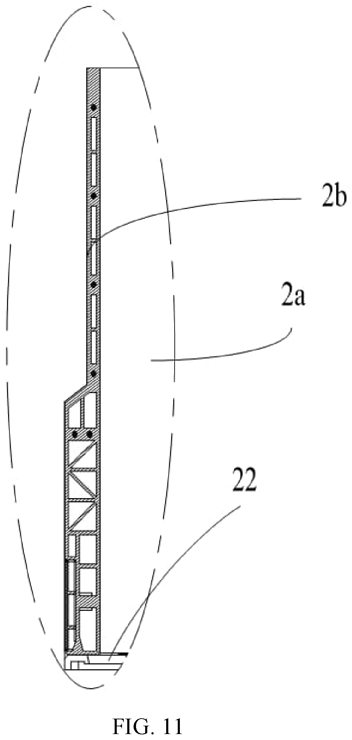

In view of this, the invention provides a housing, FIG. 1 to FIG. 11 are schematic views according to some embodiments of the housing provided by the invention, and the housing provided by the invention improves its seismic and torsional resistance. The housing will be described in detail below with reference to the main drawings.

Referring to FIG. 1, FIG. 2, FIG. 3, and FIG. 11, the housing 10 includes a bottom plate 1 and a plurality of side portions 2, the plurality of side portions 2 are sequentially connected along a circumferential direction of the bottom plate 1. The side portion 2 includes a base plate 21 and a connecting platform 22. The base plate 21 has a first side surface 211 and a second side surface 212 opposite each other along a thickness direction of the base plate 21. The connecting platform 22 is connected to the first side surface 211, and the connecting platform 22 extends along the thickness direction of the base plate 21 and is connected to the bottom plate 1. The width of the base plate 21 is defined as W, and a distance between an end of the connecting platform 22 away from the first side surface 211 and the second side surface 212 along the thickness direction of the base plate 21 is defined as L1, where L1 and W satisfy 0 < L1/W < 1/4. In this way, the connecting platform 22 connects the base plate 21 with the bottom plate 1, and the connecting platform 22 functions as a reinforcing rib, which increases the overall stability of the side portion 2 in the thickness direction. The connecting platform 22 extends along the thickness direction of the base plate 21 and is connected to the bottom plate 1. This design can increase the cross-sectional moment of inertia, thereby significantly improving the bending stiffness of the side portion 2 in the thickness direction and the overall shock resistance of the housing 10. The width W of the base plate 21 determines the main bearing area of the side portion 2, which directly affects its bending resistance and lateral stability. The distance L1 reflects the extension length of the connecting platform 22, which has an important influence on the overall rigidity. The width W of the base plate 21 and the distance L1 between an end of the first side surface 211 and the second side surface 212 are defined to satisfy 0< L1/W < 1/4, so that when a larger side portion 2 is extruded, the design of the connecting platform 22 can reduce the lateral obstruction to the metal flow on the premise of improving the seismic and torsional resistance of the housing 10, so that the metal is easier to form uniform laminar flow along the width direction of the base plate 21, and the filling defects caused by local turbulence are reduced. In addition, the design of 0 < L/W < 1/4 can not only reduce the extrusion force required for the extrusion die during extrusion molding, thereby improving the service life of the extrusion die. In addition, the quality of the formed housing 10 can also be improved.

It should be noted that a value of L/W may be selected as required, for example, the value of L/W may be 0.1, 0.12, 0.15, 0.18, 0.2, 0.22, or 0.25. Exemplarily, this is not limited in the invention. When L1 and W satisfy L1/W > 1/4, the lateral obstruction to the metal flow will be increased, which is not convenient for extrusion molding.

In some embodiments, the bottom plate 1 is lap-jointed with the connecting platform 22, so that the contact area between the side portion 2 and the bottom plate 1 is increased, which helps to disperse stress and reduce local stress concentration when the side portion 2 and the bottom plate 1 are fixedly connected, so that the junction between the side portion 2 and the bottom plate 1 can bear a large load without failure. The larger contact area helps to absorb and disperse vibration and impact energy, thereby improving the seismic and torsional resistance of the housing 10.

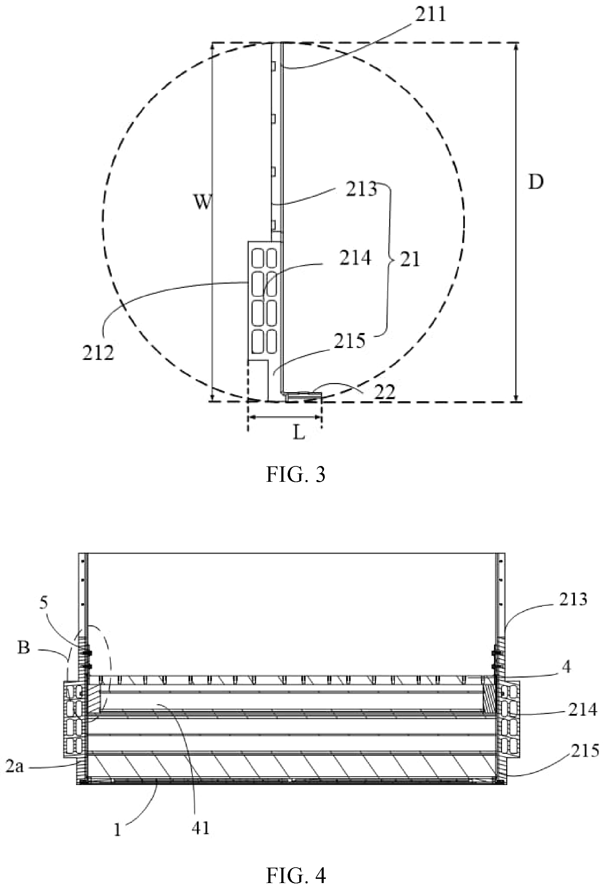

Referring to FIG. 3, in some embodiments, two ends of the base plate 21 in the width direction of the base plate 21 and an end of the connecting platform 22 away from the base plate 21 lie on the same circumcircle, which helps to disperse stress, reduce local stress concentration, and improve the structural stability of the side portion 2. The diameter of the circumcircle is defined as D, satisfying 500 mm ≤ D ≤ 650 mm, so that the forming process of the side portion is easier to control and the forming difficulty is reduced while meeting the production requirements. In addition, the diameter of the circumcircle is between 500 mm and 650 mm, which can ensure that the housing has enough space to install the battery module, thereby improving the capacity of the battery pack having the housing.

It should be noted that the diameter of the circumcircle may be selected as required, for example, the diameter of the circumcircle may be 500 mm, 530 mm, 550 mm, 580 mm, 600 mm, 620 mm, or 650 mm. Exemplarily, this is not limited in the invention. In addition, when the diameter of the circumcircle is less than 500 mm, the capacity of the housing is small, which cannot meet the use requirements of users. When the diameter of the circumcircle is greater than 650 mm, production processing of the side portion is difficult.

Referring to FIG. 1, in some embodiments, the plurality of side portions 2 include two second side portions 2b, and the two second side portions 2b are spaced apart and symmetrically arranged along the length direction of the bottom plate 1. In this way, the two second side portions 2b have the same structure, which facilitates processing of the two second side portions 2b through one set of mold, thereby saving costs. In addition, the two symmetrically arranged second side portions 2b can form a couple balance, and the load is uniformly transmitted to the bottom plate 1 through the two second side portions 2b to avoid overload of a single side portion 2. The two symmetrically arranged second side portions 2b can evenly share torque and reduce local stress concentration when subjected to force, thereby improving the torsional resistance of the housing 10.

Referring to FIG. 1, in some embodiments, the plurality of side portions 2 include two first side portions 2a, and the two first side portions 2a are spaced apart and symmetrically arranged along the width direction of the bottom plate 1. In this way, the two first side portions 2a have the same structure, which facilitates processing of the two first side portions 2a through one set of mold, thereby saving costs. In addition, the two symmetrically arranged first side portions 2a can form a couple balance, and the load is uniformly transmitted to the bottom plate 1 through the two first side portions 2a to avoid overload of a single side portion 2. The two symmetrically arranged first side portions 2a can evenly share torque and reduce local stress concentration when subjected to force, thereby improving the torsional resistance of the housing 10.

Referring to FIG. 3, in some embodiments, the base plate 21 includes a first plate section 213, a second plate section 214, and a third plate section 215 connected in sequence along the thickness direction of the bottom plate 1. The thickness of the first plate section 213 is less than the thickness of the second plate section 214, and the third plate section 215 is connected to the connecting platform 22, so that while ensuring the structural strength of the base plate 21, materials are saved, and the production cost and the weight of the housing 10 are reduced. In addition, since the thickness of the second plate section 214 is large, the rigidity of the base plate 21 is increased, and the deformation of the housing 10 can be reduced.

Referring to FIG. 1, in some embodiments, the housing 10 further includes a plurality of screw connectors 3, and two adjacent base plates 21 are fixed by screwing through the plurality of screw connectors 3. In this way, the design of the screw connector 3 increases the rigidity of the housing 10, reduces deformation of the housing 10, and improves the structural stability of the housing 10. This design enables the housing 10 to distribute the load more evenly when subjected to a force, thereby reducing the risk of failure. The screw connector 3 provides a detachable connection manner to facilitate maintenance and repair of the housing 10. This design makes it easier to remove and reinstall the screw connector 3 when the component needs to be repaired or replaced. The design of the screw connector 3 increases the bearing capacity of the housing 10, so that the overall structure of the housing 10 can bear a larger load.

Referring to FIG. 1, in some embodiments, the plurality of screw connectors 3 include a first screw connector 31 and a second screw connector 32. The first screw connector 31 is disposed on the first plate section 213 and adjacent to the second plate section 214, and the second screw connector 32 is disposed on the second plate section 214 and adjacent to the first screw connector 31. In this way, since there is a sudden section change at the junction between the first plate section 213 and the second plate section 214, by providing the first screw connector 31 and the second screw connector 32, the stress of the side portion 2 can be evenly distributed through the first screw connector 31 and the second screw connector 32 when the side portion 2 is subjected to a force, thereby avoiding damage from the side portion 2 caused by stress concentration. In addition, the arrangement of the first screw connector 31 and the second screw connector 32 increases the structural rigidity of the housing 10, reduces the deformation of the housing 10, and improves the structural stability and service life of the housing 10.

It should be noted that a plurality of first screw connectors 31 may be provided, and the plurality of first screw connectors 31 are arranged spaced apart along the length direction of the base plate 21. In this way, the two adjacent side portions 2 are firmly connected, and the stress of the side portions 2 can be evenly distributed through the plurality of first screw connectors 31 when subjected to a force, thereby avoiding damage from the side portions 2 caused by stress concentration. The plurality of second screw connectors 32 may be provided and are arranged spaced apart along the length direction of the base plate 21. In this way, the two adjacent side portions 2 are firmly connected, and the stress of the side portions 2 can be evenly distributed through the plurality of second screw connectors 32 when subjected to a force, thereby avoiding damage from the side portions 2 caused by stress concentration.

In some embodiments, the distance from the first screw connector 31 to the junction between the first plate section 213 and the second plate section 214 is L2, where 25 mm ≤ L2 ≤ 70 mm, so that the connection strength of the first screw connector 31 is ensured, and the disassembly and assembly of the first screw connector 31 are facilitated.

It should be noted that when L2 is greater than 70 mm, the first screw connector 31 cannot effectively reinforce the junction between the first plate section 213 and the second plate section 214, so that the junction is prone to cracking due to external forces. When L2 is less than 25, the installation operation of the first screw connector 31 is difficult. For example, the value of L2 may be selected as required, for example, L2 may be 25 mm, 30 mm, 35 mm, 40 mm, 45 mm, 50 mm, 55 mm, 60 mm, 65 mm, or 70 mm. Exemplarily, this is not limited in the invention.

A distance from the second screw connector 32 to a junction between the first plate section 213 and the second plate section 214 is defined as L3, satisfying 25 mm ≤ L3 ≤ 70 mm. In this way, the connection strength of the second screw connector 32 is ensured, and disassembly and assembly of the second screw connector 32 are facilitated.

It should be noted that when L3 is greater than 70 mm, the second screw connector 32 cannot effectively reinforce the junction between the first plate section 213 and the second plate section 214, so that the junction is prone to cracking due to external forces. When L3 is less than 25, the installation operation of the second screw connector 32 is difficult. For example, the value of L3 may be selected as required, for example, L3 may be 25 mm, 30 mm, 35 mm, 40 mm, 45 mm, 50 mm, 55 mm, 60 mm, 65 mm, or 70 mm. Exemplarily, this is not limited in the invention.

Referring to FIG. 1, in some embodiments, two adjacent side portions 2 are fixed by welding. In this way, the welding can increase the rigidity of the housing 10, reduce the deformation of the housing 10, and improve the structural stability of the housing 10. The welding can increase the bearing capacity of the structure, so that the overall structure of the housing 10 can bear a larger load. In addition, the welding improves the sealing performance of the housing 10.

It should be noted that there are various implementations of welding between two adjacent side portions 2, for example, in some embodiments, two adjacent base plates 21 may be fixed by welding. In some other embodiments, two adjacent connecting platforms 22 may be fixed by welding. In some other embodiments, two adjacent base plates 21 may be fixed by welding, and two adjacent connecting platforms 22 may be fixed by welding. Exemplarily, this is not limited in the invention.

In some embodiments, the bottom plate 1 is screwed and/or welded to the plurality of connecting platforms 22. In this way, screwing and/or welding may increase the rigidity of the housing 10, reduce the deformation of the housing 10, and improve the structural stability of the housing 10. The design of the plurality of connecting platforms 22 may increase the bearing capacity of the housing 10, so that the overall structure of the housing 10 can bear a larger load.

It should be noted that a specific connection manner between the bottom plate 1 and the plurality of connecting platforms 22 may be selected as required, which is not limited in the invention. Moreover, when the bottom plate 1 is screwed and welded to the plurality of connecting platforms 22, the bottom plate 1 and the plurality of connecting platforms 22 are most firmly connected.

In some embodiments, the bottom plate 1 is screwed and/or welded to the plurality of base plates 21. In this way, screwing and/or welding can increase the rigidity of the housing 10, reduce the deformation of the housing 10, and improve the structural stability of the housing 10.

It should be noted that a connection manner between the bottom plate 1 and the plurality of base plates 21 may be selected as required, which is not limited in the invention. In addition, when the bottom plate 1 is screwed and welded to the plurality of base plates 21, the bottom plate 1 and the base plates 21 are most firmly connected.

In some embodiments, the plurality of side portions 2 include two opposite first side portions 2a spaced apart from each other, the housing 10 further includes a crossbeam 4, and the crossbeam 4 is connected to the two first side portions 2a and the bottom plate 1, so that the rigidity of the housing 10 is increased, the deformation of the housing 10 is reduced, and the stability of the housing 10 is improved. The design of the crossbeam 4 increases the bearing capacity of the housing 10, so that the housing 10 can bear a larger load.

Referring to FIG. 1, in some embodiments, the base plate has a symmetrical plane extending along its width direction. An end of the base plate 21 away from the connecting platform 22 is provided with an opening 8, and the opening 8 is configured for the frame to pass through. The opening 8 is symmetrically arranged about the symmetry plane, the crossbeam 4 is symmetrically arranged about the symmetry plane, and the bottom plate 1 is symmetrically arranged about the symmetry plane, so that the symmetry plane of the base plate 21 divides the housing 10 into two parts in mirror symmetry, so that the external load (such as the bending moment or torque transmitted by the frame) is uniformly distributed along the symmetry plane to avoid one-side stress concentration. When the frame passes through the opening 8, the support stiffness on both sides of the symmetry plane is consistent, which avoids the dynamic response difference caused by the asymmetric stiffness and reduces the resonance risk. The opening 8 through which the frame passes is symmetrical about the symmetry plane, which ensures that the load transfer path is centered after the frame is installed, so as to avoid additional bending moments caused by eccentric loads. In addition, the opening 8, the bottom plate 1, and the crossbeam 4 are all symmetrically arranged about the symmetry plane, so that the space of the interior of the housing 10 is consistent, the module can be universal, and the design is simplified.

Referring to FIG. 2, FIG. 4, and FIG. 6, in some embodiments, an end of the crossbeam 4 is provided with a plugging hole 41, and the housing 10 further includes a connector 5. The connector 5 includes a plugging platform 51 and a connecting arm 52. The connecting arm 52 has a first surface 521, the first surface 521 is disposed away from the first side surface 211 of the first side portion 2a in the thickness direction of the connecting arm 52, the plugging platform 51 is disposed on the first surface 521 and protrudes from the first surface 521 in the thickness direction of the connecting arm 52, and the plugging platform 51 is inserted into the plugging hole 41. In this way, the insertion fit between the plugging platform 51 and the plugging hole 41 can form a "mechanical lock" to inhibit the displacement of the crossbeam 4 along the length direction of the crossbeam 4. The connecting arm 52 is fixedly connected to the base plate 21 of the first side portion 2a. In this way, longitudinal constraint on the crossbeam 4 is enhanced, and bending resistance and torsion resistance of the crossbeam 4 are improved. In addition, the insertion fit between the plugging platform 51 and the plugging hole 41 also increases the rigidity of the housing 10, reduces the deformation of the housing 10, and improves the stability and bearing capacity of the housing 10.

It should be noted that both ends of the crossbeam 4 are provided with plugging holes 41, two connectors 5 are provided, and the two ends of the crossbeam 4 are fixedly connected to the base plates 21 of the two opposite first side portions 2a through the two connectors 5. In this way, the crossbeam 4 and the two first side portions 2a form a stable frame structure. This design can effectively enhance the overall rigidity of the entire housing 10 and prevent loosening or deformation caused by external impact or vibration. The design of the plugging hole 41 is matched with the fixing manner of the connector 5, so that the force can be evenly distributed on the crossbeam 4 and the base plate 21 to avoid local stress concentration. The cooperation of the plugging hole 41 and the connector 5 can ensure the precise positioning between the crossbeam 4 and the base plate 21, reduce the assembly error, and improve the assembly efficiency.

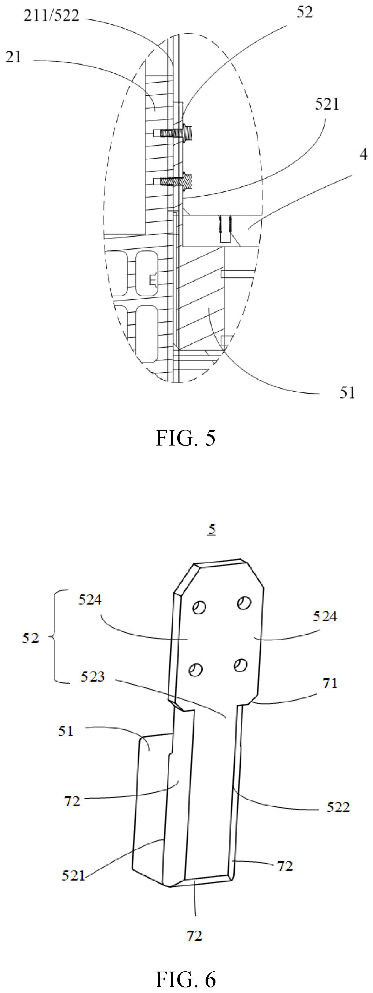

Referring to FIG. 5, in some embodiments, the connecting arm 52 is welded to the crossbeam 4. In this way, the metallurgical bonding formed by welding makes the strength of the junction close to or even equal to that of the connecting arm 52 and the crossbeam 4, so that the load can be effectively transferred, and when subjected to dynamic forces (such as vibration and impact), the welding position of the connecting arm 52 and the crossbeam 4 is not easy to loosen, making the overall structure of the housing 10 more stable and reliable. In addition, after welding, the connecting arm 52 and the crossbeam 4 form an integrated structure, which significantly improves the overall rigidity of the housing 10 and reduces the deformation of the housing 10 caused by external forces. In addition, there is no need for additional connectors 5 such as bolts and rivets, which makes the structure of the housing 10 more compact and avoids occupying the internal space of the housing 10. Moreover, the number of parts is reduced, so that the overall weight of the housing 10 is reduced. In addition, the welding process can quickly complete the connection, reduce assembly processes, and reduce labor and part purchase costs. The weld may provide a good sealing effect.

In some embodiments, the connecting arm 52 is screwed to the base plate 21, and the screwing provides a strong mechanical connection force to ensure a stable and reliable connection between the connecting arm 52 and the base plate 21. The screw joints can evenly distribute the acting force to avoid structural damage caused by local stress concentration at the junction between the connecting arm 52 and the base plate 21, and further enhance the structural stability and impact resistance of the housing 10.

It should be noted that a manner of fixedly connecting the connecting arm 52 to the base plate 21 may be selected as required. For example, the connecting arm 52 and the base plate 21 may also be fixed by welding or clamped by a buckle structure. Exemplarily, this is not limited in the invention.

Referring to FIG. 5 and FIG. 6, in some embodiments, the connecting arm 52 further has a second surface 522, the second surface 522 is disposed away from the first surface 521 in the thickness direction of the connecting arm 52, and the second surface 522 is flush with the first side surface 211 of the first side portion 2a and end face of the crossbeam 4. In this way, this design not only improves the consistency of the overall appearance, but also enhances the stability of the structure. The flush design of the second surface 522, the first side surface 211, and the end face of the crossbeam 4 reduces stress concentration points caused by irregular shapes or protrusions, which helps to disperse external loads and reduce the risk of local damage. The flush design of the second surface 522, the first side surface 211 and end face of the crossbeam 4 enables each component to be more closely attached together, thereby avoiding the waste of space caused by uneven surfaces. This helps maximize the use of the limited internal space of the housing and improve the energy density of the battery pack.

Referring to FIG. 2, FIG. 6, FIG. 7, and FIG. 8, in some embodiments, an end of the crossbeam 4 facing the first side surface 211 of the first side portion 2a is provided with a groove 42, and the groove 42 is in communication with the plugging hole 41. The groove 42 penetrates a side of the crossbeam 4 away from the bottom plate 1 in the thickness direction of the bottom plate 1. The groove 42 has two first sidewalls 43 oppositely arranged in the length direction of the base plate 21 of the first side portion 2a, the two first sidewalls 43 are respectively located on two sides of the plugging hole 41, and the two first sidewalls 43 both abut against the connecting arm 52. In this way, the two first sidewalls 43 are symmetrically distributed on both sides of the plugging hole 41 to provide a clear mounting reference for the connecting arm 52, and through the physical blocking of the first sidewalls 43, it can be ensured that the plugging platform 51 is inserted into the plugging hole 41 in the preset direction, thereby avoiding deviation or angular inclination during the assembly process. The abutment between the first sidewall 43 and the connecting arm 52 forms a physical limit, which directly resists the displacement along the length direction of the base plate 21, and prevents the connecting arm 52 from shaking left and right due to an external load (such as vibration, impact, or lateral force). The load transmitted by the connecting arm 52 is evenly distributed through the contact surface between the first sidewall 43 and the crossbeam 4 to avoid excessive stress concentration at the edge of the plugging hole 41 and reduce the risk of cracking around the hole. The symmetrical abutment of the two first sidewalls 43 can jointly resist the action of torque, prevent the connecting arm 52 from rotating or deflecting due to the torsional moment, and improve the torsional rigidity of the structure.

Referring to FIG. 2, FIG. 5, and FIG. 6, in some embodiments, the connecting arm 52 includes a connecting body 523 and two abutment platforms 524. The connecting body 523 has two sidewall surfaces facing away from each other in the length direction of the base plate 21 of the first side portion 2a. The width of the connecting body 523 is less than the width of the groove 42. The two abutment platforms 524 are respectively connected to the two sidewall surfaces and protrude in the width direction of the connecting body 523, and the two abutment platforms 524 are respectively welded to the two first sidewalls 43. In this way, the two sidewall surfaces of the connecting body 523 and the two abutment platforms 524 form symmetrical force transmission channels, so that the load can be distributed from the connecting arm 52 to the first sidewall 43 of the crossbeam 4, thereby avoiding stress concentration caused by single-sided stress. The welding of the two abutment platforms 524 and the two first sidewalls 43 forms a double connection point, and even if the weld fails on one side, the other side can still maintain the structural integrity, significantly improving the overload resistance of the housing 10. The welding of the two abutment platforms 524 and the two first sidewalls 43 can effectively resist the torsional moment of the connecting arm 52, and this design enhances the bending resistance of the connecting arm 52. The symmetrical welding design of the two abutment platforms 524 and the two first sidewalls 43 can automatically compensate for small displacements under thermal expansion or external forces, thereby reducing the assembly tolerance sensitivity.

It should be noted that a bonding process may also be added on the basis of welding, and the structural adhesive is used to fill the microscopic gap between the abutment platform 524 and the first sidewall 43, which has both the characteristics of rigid connection and damping vibration reduction. A heat dissipation channel or a phase change material (such as paraffin) may be pre-embedded inside the abutment platform 524 to facilitate heat dissipation during the welding process or release of temperature stress in subsequent use.

Referring to FIG. 2 and FIG. 6, in some embodiments, a first chamfer 71 is provided at an end of each of the abutment platforms 524 facing the first sidewall 43. When the plugging platform 51 is inserted into the plugging hole 41, a first accommodating space is formed between the abutment platform 524 and the first sidewall 43, and the first accommodating space is configured to accommodate one or more welding wires. In this way, the first accommodating space formed by the first chamfer 71 provides a fixed position for the welding wires in advance, ensuring that the molten metal is filled along a predetermined path during welding, and avoiding uneven or unfused defects of the welds caused by welding wire deviation. The first accommodating space limits the flow range of the welding wire, and the molten pool is forced to penetrate towards the abutment platform 524 and the first sidewall 43, which increases the effective penetration depth, forms a weld section with a better width-to-thickness ratio, and improves the static load and fatigue strength of the housing 10. The inclined surface of the first chamfer 71 guides the abutment platform 524 to align with the first sidewall 43 during insertion, thereby reducing assembly resistance. The first accommodating space allows a controllable assembly gap to exist between the abutment platform 524 and the first sidewall 43, which compensates for machining or installation errors through welding wire filling, and reduces the strict requirements on the dimensional accuracy of parts. The chamfer transition reduces sharp corners at the end of the abutment platform 524 and avoids stress concentration. After the weld metal fills the first accommodating space, a continuous material transition region is formed, which reduces the stress gradient at the junction and delays crack initiation. After the welding is completed, the weld metal in the accommodating space forms a "wedge-shaped interlocking" structure with the abutment platform 524 and the first sidewall 43, which can effectively resist interface peeling under impact load and improve the connection reliability under dynamic working conditions. Through the chamfer design, gravity and capillary action can be used to penetrate the molten pool to the back surface during single-sided welding, thereby achieving a double-sided welding effect, reducing the number of times of turning workpieces, and improving production efficiency. If a local defect occurs in the weld, the first accommodating space may be used as a process groove for polishing and welding repairing, to avoid damaging the abutment platform 524 and the first sidewall 43, thereby simplifying a repair process.

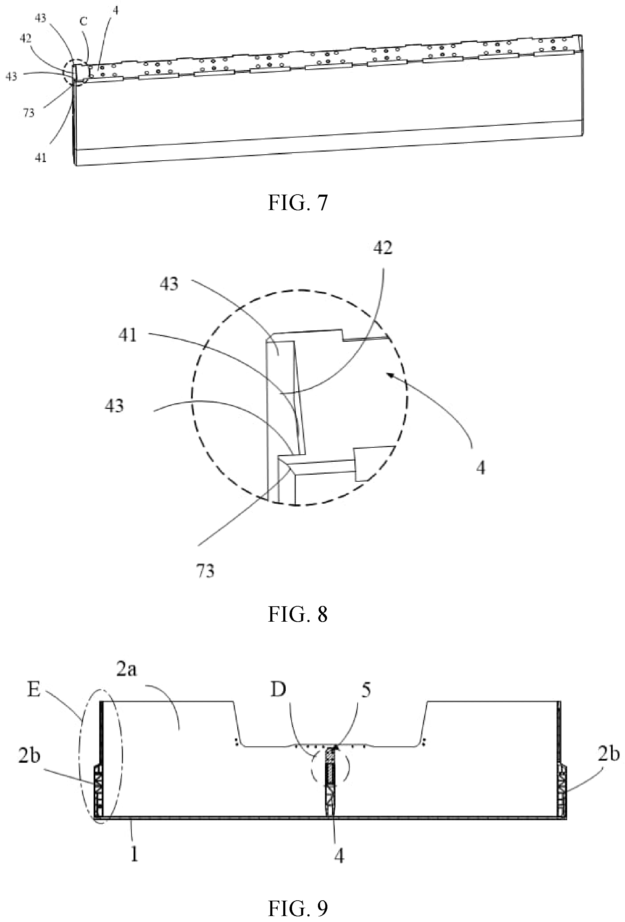

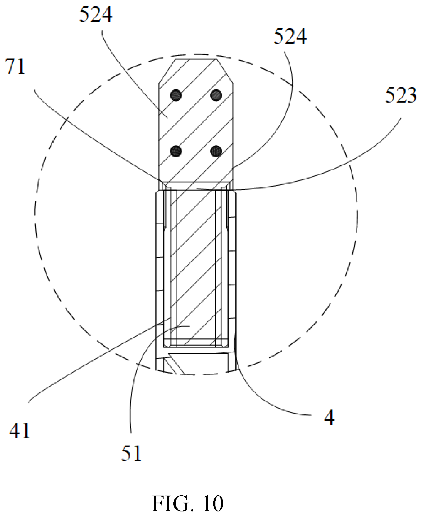

Referring to FIG. 9 and FIG. 10, in some embodiments, the plugging platform 51 is welded to at least one of the crossbeam 4 and the base plate 21 of the first side portion 2a. In this way, a rigid connection can be formed between the plugging platform 51 and at least one of the crossbeam 4 and the base plate 21 of the first side portion 2a, which ensures that the load is efficiently transmitted through the welding point and improves the overall bearing capacity of the housing 10. The welding integrates the plugging platform 51 with at least one of the crossbeam 4 and the base plate 21 of the first side portion 2a, reducing the risk of loosening caused by vibration.

It should be noted that when the plugging platform 51 is welded to the crossbeam 4 and the base plate 21 of the first side portion 2a, the plugging platform 51 is most firmly connected to the crossbeam 4 and the base plate 21 of the first side portion 2a. Of course, in other embodiments, the plugging platform 51 may be fixed to the crossbeam 4 by welding. In some other embodiments, the plugging platform 51 may be welded to the base plate 21 of the first side portion 2a. Exemplarily, this is not limited in the invention.

Referring to FIG. 6, in some embodiments, the plugging platform 51 is provided with a plurality of second chamfers 72, and the plurality of second chamfers 72 are all disposed toward the base plate 21 of the first side portion 2a, so that the plugging platform 51, the crossbeam 4, and the base plate 21 of the first side portion 2a together define a second accommodating space, and the second accommodating space is configured to accommodate one or more welding wires. In this way, the inclined surface of the second chamfer 72 guides the molten metal to flow to the junction of the base plate 21 and the crossbeam 4, reducing welding dead angles and avoiding unfusion or slag clamping defects, so that the weld between the plugging platform 51, the crossbeam 4, and the base plate 21 of the first side portion 2a is formed more uniformly. The second chamfer 72 converts the right-angle connection between the plugging platform 51 and the base plate 21 into a gradual transition to reduce the stress concentration coefficient. The arrangement of the second accommodating space enables the molten metal to be automatically filled during welding, which is compatible with the difference in thermal expansion of the plugging platform 51, the crossbeam 4, and the first side portion 2a.

Referring to FIG. 7 and FIG. 8, in some embodiments, a side of the crossbeam 4 away from the plugging hole is provided with a plurality of third chamfers 73, and the plurality of third chamfers 73 are all disposed toward the base plate 21 of the first side portion 2a, so that a third accommodating space is formed between the crossbeam 4 and the base plate 21 of the first side portion 2a, and the third accommodating space is configured to accommodate one or more welding wires. In this way, the third accommodating space provides a stable filling position for the welding wire, and ensures that the molten metal is evenly distributed along the junction between the crossbeam 4 and the base plate 21. The inclined surface of the chamfer guides the molten pool to the critical connection interface, enhances the fusion depth, and reduces the risk of unfusion or slag clamping. The third chamfer 73 converts the right-angle connection between the crossbeam 4 and the base plate 21 into a progressive transition, so that the stress concentration coefficient is reduced.

In a second aspect, the invention further provides a battery pack, the battery pack includes a housing 10, the specific structure of the housing 10 refers to the embodiments, and since the battery pack uses all the technical solutions of all the above embodiments, the battery pack has at least all the beneficial effects brought by the technical solutions of the above embodiments, and details are not repeated here.

In a third aspect, the embodiments of the invention further provide a vehicle, where the vehicle includes a battery pack, and for a specific structure of the battery pack, refer to the embodiments. Since the vehicle uses all the technical solutions of all the above embodiments, the vehicle has at least all beneficial effects brought by the technical solutions of the above embodiments, and details are not repeated here.

## Claims

1. A housing (10), comprising:
a bottom plate (1); and
a plurality of side portions (2) sequentially connected along a circumferential direction of the bottom plate (1), **characterized in that** each of the side portions (2) comprises a base plate (21) and a connecting platform (22), the base plate (21) comprises a first side surface (211) and a second side surface (212) opposite to each other along a thickness direction of the base plate (21), the connecting platform (22) is connected to the first side surface (211), the connecting platform (22) extends along the thickness direction of the base plate (21) and is connected to the bottom plate (1), a width of the base plate (21) is defined as W, a distance between an end of the connecting platform (22) facing away from the first side surface (211) and the second side surface (212) along the thickness direction of the base plate (21) is defined as L1, and L1 and W satisfy: 0< L1/W < 1/4.

2. The housing (10) of claim 1, wherein two ends of the base plate (21) in the width direction of the base plate (21) and an end of the connecting platform (22) facing away from the base plate (21) lie on a same circumcircle, and a diameter of the circumcircle is defined as D, wherein D satisfies: 500 mm ≤ D ≤ 650 mm.

3. The housing (10) of claim 1 or 2, wherein the base plate (21) comprises a first plate section (213), a second plate section (214), and a third plate section (215) connected in sequence along a thickness direction of the bottom plate (1), a thickness of the first plate section (213) is less than a thickness of the second plate section (214), and the third plate section (215) is connected to the connecting platform (22).

4. The housing (10) of claim 3, wherein the housing (10) further comprises a plurality of screw connectors (3), and two adjacent base plates (21) are fixed by screwing through some of the plurality of screw connectors (3); and/or
two adjacent ones of the side portions (2) are fixed by welding.

5. The housing (10) of claim 4, wherein the plurality of screw connectors (3) comprise a first screw connector (31) (3) and a second screw connector (32) (3), the first screw connector (31) (3) is disposed on the first plate section (213) and adjacent to the second plate section (214), and the second screw connector (32) (3) is disposed on the second plate section (214) and adjacent to the first screw connector (31) (3).

6. The housing (10) of claim 5, wherein in the thickness direction of the bottom plate (1), a distance from a junction between the first plate section (213) and the second plate section (214) to the first screw connector (31) (3) is L2, wherein L2 satisfies: 25 mm ≤ L2 ≤ 70 mm; and/or
wherein in the thickness direction of the bottom plate (1), a distance from a junction between the first plate section (213) and the second plate section (214) to the second screw connector (32) (3) is L3, wherein L3 satisfies: 25 mm ≤ L3 ≤ 70 mm.

7. The housing (10) of any one of claims 1 to 6, wherein the bottom plate (1) is fixed to a plurality of the connecting platforms (22) by screwing and/or welding; and/or
the bottom plate (1) is fixed to a plurality of the base plate (21) by screwing and/or welding.

8. The housing (10) of any one of claims 1 to 7, wherein the plurality of side portions (2) comprise two opposite first side portions (2a) arranged spaced apart from each other; and
wherein the housing (10) further comprises a crossbeam (4), and the crossbeam (4) is connected to the two first side portions (2a) and the bottom plate (1).

9. The housing (10) of claim 8, wherein an end of the crossbeam (4) is provided with a plugging hole (41);
wherein the housing (10) further comprises a connector (5), the connector (5) comprises a plugging platform (51) and a connecting arm (52), the connecting arm (52) comprises a first surface (521), the first surface (521) is disposed away from the first side surface (211) of the first side portion (2a) in a thickness direction of the connecting arm (52), the plugging platform (51) is disposed on the first surface (521) and protrudes from the first surface (521) in the thickness direction of the connecting arm (52), the plugging platform (51) is inserted into the plugging hole (41), and the connecting arm (52) is fixedly connected to the base plate (21) of the first side portion (2a).

10. The housing (10) of claim 9, wherein the connecting arm (52) is fixed to the crossbeam (4) by welding; and/or
the connecting arm (52) is fixed to the base plate (21) by screwing.

11. The housing (10) of claim 9, wherein the connecting arm (52) further comprises a second surface (522), the second surface (522) is disposed away from the first surface (521) in the thickness direction of the connecting arm (52), and the second surface (522) is flush with the first side surface (211) of the first side portion (2a) and an end face of the crossbeam (4).

12. The housing (10) of claim 9, wherein an end of the crossbeam (4) facing the first side surface (211) of the first side portion (2a) is provided with a groove (42), the groove (42) is in communication with the plugging hole (41), the groove (42) penetrates a side of the crossbeam (4) away from the bottom plate (1) in a thickness direction of the bottom plate (1), the groove (42) comprises two first sidewalls (43) oppositely arranged in a length direction of the base plate (21) of the first side portion (2a), the two first sidewalls (43) are respectively located on two sides of the plugging hole (41), and the two first sidewalls (43) abut against the connecting arm (52).

13. The housing (10) of claim 12, wherein the connecting arm (52) comprises:
a connecting body (523) comprising two sidewall surfaces (2a) facing away from each other in the length direction of the base plate (21) of the first side portion, a width of the connecting body (523) being less than a width of the groove (42); and
two abutment platforms (524) respectively connected to the two sidewall surfaces and protruding along a width direction of the connecting body (523), the two abutment platforms (524) being respectively fixed to the two first sidewalls (43) by welding.

14. The housing (10) of claim 13, wherein an end of each of the two abutment platforms (524) facing a corresponding one of the two first sidewalls (43) is provided with a first chamfer (71);
wherein when the plugging platform (51) is inserted into the plugging hole (41), a first accommodating space is formed between one of the two abutment platforms (524) and a corresponding one of the two first sidewalls (43), and the first accommodating space is configured to accommodate one or more welding wires.

15. The housing (10) of claim 9, wherein the plugging platform (51) is fixed to at least one of the crossbeam (4) and the base plate (21) of the first side portion (2a) by welding.

16. The housing (10) of claim 15, wherein the plugging platform (51) is provided with a plurality of second chamfers (72), and the plurality of second chamfers (72) are all disposed toward the base plate (21) of the first side portion (2a), so that the plugging platform (51), the crossbeam (4), and the base plate (21) of the first side portion (2a) together enclose a second accommodating space, and the second accommodating space is configured to accommodate one or more welding wires; and/or
wherein a side of the crossbeam (4) away from the plugging hole (41) is provided with a plurality of third chamfers (73), and the plurality of third chamfers (73) are all disposed toward the base plate (21) of the first side portion (2a), so that a third accommodating space is formed between the crossbeam (4) and the base plate (21) of the first side portion (2a), and the third accommodating space is configured to accommodate one or more welding wires.

17. The housing (10) of any one of claims 1 to 6, wherein the plurality of side portions (2) comprise two second side portions (2b), and the two second side portions (2b) are arranged spaced apart and symmetrically along a length direction of the bottom plate (1); and/or
wherein the plurality of side portions (2) comprise two first side portions (2a), and the two first side portions (2a) are spaced apart and symmetrically arranged along a width direction of the bottom plate (1).

18. A battery pack, comprising the housing (10) of any one of claims 1 to 17.

19. A vehicle, comprising the battery pack of claim 18.
